# EUROPEAN PATENT APPLICATION

(11) **EP 4 807 875 A1**
(43) Date of publication of application: **16.09.2026**
(21) Application number: 25163505.8
(22) Date of filing: 13.03.2025
(51) Int. Cl.: H01M 50/256, H01M 10/04, H01M 50/209

(54) **METHOD FOR ASSEMBLING A BATTERY PACK AND BATTERY PACK**

(71) Applicant: SAMSUNG SDI CO., LTD., Yongin-si, Gyeonggi-do 17084 (KR)
(72) Inventor: Engelbrecht, Stefan, 8055 Graz (AT); Klement, Thomas, 1060 Wien (AT)
(74) Representative: Gulde & Partner

(57) **Abstract**

The present disclosure relates to a method for assembling a battery pack including at least one battery cell stack, where the stack includes a plurality of battery cells arranged in a compressed state. The method includes the steps of:
a) compressing the battery cell stack using a compression tool and maintaining the applied pressure during subsequent assembly steps;
b) attaching a stack holder to the battery cell stack in its compressed state, wherein the stack holder includes two profiles each extending along a lateral side of the battery cell stack, each profile including an upper portion extending beyond the lateral side of the battery cell stack and having first engagement elements;
c) providing a lifting tool including second engagement elements designed to be engaged with the first engagement elements, interlocking the second engagement elements with the first engagement elements of the stack holder by the lifting tool, lifting of the battery cell stack and positioning the lifted cell stack above an accommodation chamber of a pack housing;
d) transferring the battery cell stack from the compression tool directly into the accommodation chamber of the pack housing; and
e) detaching the second engagement elements of the lifting tool from the first engagement elements of the stack holder, allowing the lifting tool to separate from the stack holder, with the stack holder remaining in the accommodation chamber along with the battery cell stack.

## Description

### Field of the Disclosure

Embodiments of the present disclosure relate to a method of assembling a battery pack and a battery pack.

### Technological Background

A battery pack is a set of any number of (for example identical) battery stacks, which include one or more modules and/or single battery cells. The battery modules, respectively battery cells, may be configured in a series, parallel or a mixture of both to deliver the desired voltage, capacity, and/or power density. Components of a battery stack include the individual battery modules, and the interconnects, which provide electrical conductivity between the battery modules.

The formation of battery packs from individual battery cells involves connecting multiple cells in a specific configuration to achieve the desired electrical output in terms of voltage and capacity. Each cell, typically consisting of an anode, cathode, separator, and electrolyte, provides a specific voltage based on its chemical composition. To create a battery stack, cells are connected in series to increase the voltage or in parallel to increase the capacity. Precise alignment, insulation, and mechanical stability are essential to ensure the cells operate harmoniously within the stack, avoiding issues like thermal runaway or cell imbalance. Battery management systems (BMS) monitor and regulate each cell's performance, contributing to the overall efficiency, safety, and longevity of the stack.

The formation of battery packs on an industrial scale presents significant challenges due to the complexity of aligning and connecting individual cells with precision, ensuring consistent electrical performance, and maintaining safety standards. Variations in cell quality, handling difficulties, and the risk of thermal issues complicate the process, often leading to inefficiencies and higher costs.

Hence, the present disclosure aims to provide a method to streamline battery pack formation, focusing on improving alignment accuracy and connection reliability. This method seeks to address these obstacles to enable more efficient, scalable, and safer battery pack production.

### Summary of Disclosure

The disclosure is defined by the appended claims. The description that follows is subjected to this limitation. Any disclosure lying outside the scope of the claims is only intended for illustrative as well as comparative purposes.

One embodiment refers to a method for assembling a battery pack including at least one battery cell stack with a plurality of the method including the steps of:
a) compressing the battery cell stack using a compression tool and maintaining the applied pressure during subsequent assembly steps;
b) attaching a stack holder to the battery cell stack in its compressed state, wherein the stack holder includes two profiles each extending along a lateral side of the battery cell stack, each profile including an upper portion extending beyond the lateral side of the battery cell stack and having first engagement elements;
c) providing a lifting tool including second engagement elements designed to be engaged with the first engagement elements, interlocking the second engagement elements with the first engagement elements of the stack holder by the lifting tool, lifting of the battery cell stack and positioning the lifted cell stack above an accommodation chamber of a pack housing;
d) transferring the battery cell stack from the compression tool directly into the accommodation chamber of the pack housing; and
e) detaching the second engagement elements of the lifting tool from the first engagement elements of the stack holder, allowing the lifting tool to separate from the stack holder, with the stack holder remaining in the accommodation chamber along with the battery cell stack.

Another embodiment of the present disclosure refers to a battery pack including:
- a pack housing with at least one accommodation chamber;
- a battery cell stack positioned within the accommodation chamber; and
- a stack holder including two profiles each extending along a lateral side of the battery cell stack, each profile including an upper portion extending beyond the lateral side of the battery cell stack and having first engagement elements.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates in a schematic view step a) of an assembling method for a battery pack according to an embodiment of the present disclosure.
- FIG. 2A: illustrates a schematic view on a transitionary state between step a) and step b) of the assembling method.
- FIG. 2B: illustrates a schematic view on step b) of the assembling method.
- FIG. 3A: illustrates a schematic view on a transitionary state between step b) and step c) of the assembling method.
- FIG. 3B: illustrates a schematic view on step c) of the assembling method.
- FIG. 3C: illustrates a schematic side view on step c).
- FIG. 4A: illustrates a schematic side view on a transitionary state between step c) and step d) of the assembling method.
- FIG. 4B: illustrates a schematic view on step d) of the assembling method.
- FIG. 4C: illustrates a schematic side view on step d).
- FIG. 5A: illustrates a schematic view on a transitionary state between step d) and step e) of the assembling method.
- FIG. 5B: illustrates a schematic side view on step e).
- FIG. 6: illustrates a schematic view of a batter pack according to an embodiment of the present disclosure.
- FIG. 7A: illustrates a schematic view of a snap-fit according to another embodiment of the present disclosure.
- FIG. 7B: illustrates a schematic view of a snap-fit according to another embodiment of the present disclosure.
- FIG. 8: illustrates in a schematic view the process of the battery pack assembly according to an embodiment.

### Detailed Description of the Disclosure

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

One embodiment of the disclosure refers to a method for assembling a battery pack including at least one battery cell stack with a plurality of the method including the steps of:
a) compressing the battery cell stack using a compression tool and maintaining the applied pressure during subsequent assembly steps;
b) attaching a stack holder to the battery cell stack in its compressed state, wherein the stack holder includes two profiles each extending along a lateral side of the battery cell stack, each profile including an upper portion extending beyond the lateral side of the battery cell stack and having first engagement elements;
c) providing a lifting tool including second engagement elements designed to be engaged with the first engagement elements, interlocking the second engagement elements with the first engagement elements of the stack holder by the lifting tool, lifting of the battery cell stack and positioning the lifted cell stack above an accommodation chamber of a pack housing;
d) transferring the battery cell stack from the compression tool directly into the accommodation chamber of the pack housing; and
e) detaching the second engagement elements of the lifting tool from the first engagement elements of the stack holder, allowing the lifting tool to separate from the stack holder, with the stack holder remaining in the accommodation chamber along with the battery cell stack.

In other words, the embodiment pertains to a method for assembling a battery pack that includes at least one battery cell stack composed of a plurality of battery cells. The at least one battery cell stack may be placed in between at least two end plates. The method involves sequential steps to compress the battery cell stack, secure it in place using a stack holder, and transfer it into a housing chamber that maintains compression on the stack, optimizing the stability and lifespan of the battery cells.

The method begins by compressing the battery cell stack with a compression tool, applying a defined pressure and maintaining this force during the subsequent assembly stages. The compression tool ensures that each battery cell in the stack is compacted uniformly, which mitigates issues like cell swelling or displacement under load.

Once compressed, a stack holder is attached to the battery cell stack while the battery cell stack is in its compressed state. The stack holder is composed of at least two profiles, each profile positioned along a lateral side of the stack, ensuring lateral stability during handling. Each profile has an upper portion extending above the battery cell stack with specific first engagement elements, such as openings, grooves or pins, designed to interact with a lifting tool. The first engagement elements facilitate precise handling and positioning of the battery stack.

In the next step, a lifting tool is provided, the lifting tool including second engagement elements which are designed to be engaged with the first engagement elements such, that the second engagement elements interlock with the first engagement elements of the stack holder. This enables the lifting tool to elevate the battery stack above the designated accommodation chamber within the pack housing.

The pack housing is a robust structure intended to securely contain the battery cell stack, ensuring that no external forces destabilize the arrangement during transportation or use.

The compressed battery stack is then transferred directly from the compression tool into the housing chamber. During this step, the compression force applied by the tool is not released, ensuring that the battery cell stack remains compacted throughout the transfer process.

Upon positioning the battery cell stack within the pack housing, the second engagement elements of the lifting tool are retracted, allowing the lifting tool to separate from the stack holder, which remains securely in place within the accommodation chamber alongside the battery cell stack. The stack holder remains in the accommodation chamber along with the battery cell stack.

The housing chamber itself is dimensioned and designed to exert a constant pressure on the battery cell stack in the stacking direction. This intrinsic compression helps maintain the integrity of the battery cell stack, reducing the potential for internal movement, deformation, or capacity degradation over time.

A battery cell stack is a collection of battery cells arranged sequentially and compacted between at least two end plates. The cells are typically lithium-ion cells, where each battery cell is a cuboidal structure. The cells can be other types than lithium-ion cells, such as nickel-cadmium or nickel-metal hydride or lead-acid or sodium-sulfur or solid-state batteries or zinc-air batteries or flow batteries or alkaline batteries or lithium iron phosphate batteries.

A battery cell is a prismatic battery cell with rectangular cross-section, providing high volumetric efficiency for compact battery applications. Their alignment ensures consistent current pathways and heat dissipation.

End plates are rigid structures at either end of the battery cell stack, distributing compressive forces evenly across the cells to reduce swelling and ensure longevity.

A compression tool is a device applying a quantifiable, consistent force on the battery cell stack in the stacking direction, typically measured in Newton [N] or Megapascal [Mpas], to achieve and maintain a uniform compression that prevents internal displacement or expansion.

A stack holder is a structural component fixed to the battery cell stack during assembly to maintain compression and stability. It includes profiles with first engagement elements.

The first engagement elements can be slots or holes or hooks and are designed to interact with lifting tools.

The pack housing is the outer casing or structural chamber that accommodates the compressed battery cell stack, designed to apply pressure along the stacking direction continuously. This pressure ensures that the cells remain stable and compact over time.

The stacking direction is the axis along which the battery cells are aligned, typically vertical within the housing chamber, defining the direction of compression.

The applied compression force can be measured using a force gauge on the compression tool, ensuring uniform application across the stack. The dimensions of the stack holder's first engagement elements can be verified using calipers to ensure compatibility with the lifting tools second engagement elements, facilitating secure handling. Pressure within the pack housing on the battery cell stack in the stacking direction may be measured by sensors within walls of the pack housing to ensure it maintains the necessary compression.

According to one embodiment, the stack holder is composed of plastic. This material choice influences several aspects of the battery assembly process, including weight, insulation properties, and ease of manufacturing.

The plastic composition provides electrical insulation, which can prevent potential short-circuiting or unintended electrical contact between the holder and the battery cells or other components within the battery pack. This is particularly beneficial for battery applications where electrical isolation is critical for safety and performance. Furthermore, plastic allows for cost-effective and flexible manufacturing, as it can be molded precisely into complex shapes to fit the battery cell stack's dimensions and engagement feature requirements.

Plastic is a polymer material chosen for its combination of lightweight, insulating properties, and ease of manufacturing.

Typical plastics include polypropylene, polycarbonate, or high-density polyethylene, which are known for their durability and heat resistance.

Electrical insulation is the ability of a material to prevent the flow of electric current. In the context of the stack holder, this quality helps avoid short circuits within the battery pack.

According to another embodiment, each of the profiles of the stack holder is L-shaped in such a way, that a lower portion of each profile supports a bottom side of the battery cell stack.

This specific shape allows each profile to support not only the lateral sides of the battery cell stack but also to extend underneath and support the bottom side of the battery cell stack. It further enhances the stability and alignment of the battery cell stack within the assembly, providing secure, multi-directional support.

In detail, the lower portion of the profiles is L-shaped. The vertical portion of the "L" aligns along the lateral sides of the battery cell stack, maintaining lateral compression and securing the stack against horizontal shifting. Meanwhile, the horizontal or lower portion of the "L" extends beneath the battery cell stack, providing direct support to its bottom side. This design ensures that the batter cell stack is both laterally and vertically stabilized within the stack holder, minimizing movement and potential misalignment during assembly and operation.

Another embodiment of the present disclosure is directed to the first engagement elements configured to be openings.

These openings, positioned on the upper portion of the stack holder profiles, provide secure attachment points that facilitate precise lifting and handling of the compressed battery cell stack during assembly.

The openings are distributed evenly across the upper portion of the stack holder profiles.

Openings may be holes or voids within the upper portion of the stack holder profiles. The openings are designed to match the attachment components of the lifting tool.

According to another embodiment, in step c), the second engagement elements of the lifting tool are brought into engagement with the first engagement elements of the stack holder, for example, engage with the openings of the stack holder, from an inner side of the stack holder. This configuration allows the lifting tool to approach and, for example, insert its second engagement elements into the engagement openings, from within the inner side of the stack holder profiles, rather than from the exterior.

In detail, this method step specifies that the lifting tool's second engagement elements are directed from an inner-facing position, meaning they approach the stack holder's openings from a side closer to the center of the battery cell stack rather than from the outer perimeter. This positioning allows the lifting tool to reach and attach securely without needing external clearance around the stack holder. As the second engagement elements of the lifting tool engage from this inner side, they are brought into engagement with the first engagement elements of the stack holder, for example, enter each engagement opening with precision, aligning securely to lift and hold the battery cell stack in place during its transfer to the housing chamber.

The inner side refers to the side of each profile of the stack holder that faces inward toward the battery cell stack. The inner side contrasts with the outer side, which would face outward toward the external environment. The inner side provides a protected area for engagement with the lifting tool's second engagement elements.

Second engagement elements are the extensions of the lifting tool designed to interact with the complementary first engagement elements, for example, insert into the engagement openings on the inner side of the stack holder, providing a secure lifting point for the battery cell stack. The second engagement elements' dimensions must match first engagement elements, such as the openings, and their position on the lifting tool is measured to ensure they align correctly with the stack holder's engagement points.

Yet another embodiment of the disclosure refers to a feature in which the stack holder is equipped with a snap-fit including a protruding edge designed to engage with a corresponding snap-in area in the pack housing. This snap-fit mechanism prevents vertical displacement of the battery cell stack within the accommodation chamber, thereby securing its position and maintaining alignment.

A snap-fit protrusion is a raised structural feature on the stack holder designed to latch into a matching groove in the pack housing. The protrusion can have a slight taper or flexibility to allow for a secure yet detachable fit when engaged.

A groove is a recessed channel or indentation within the inner surface of the pack housing that aligns with and accommodates the snap-fit protrusion. The groove's dimensions, such as depth and width, match the snap-fit protrusion and provide a tight fit.

Vertical displacement may be any potential upward or downward movement of the battery cell stack within the accommodation chamber. This term refers to unintended shifts in the stacks position, which the snap-fit mechanism is designed to prevent.

The accommodation chamber is the designated compartment within the pack housing that holds and secures the compressed battery cell stack in its assembled form.

Another embodiment is directed to, in step b), the stack holder being attached to the battery cell stack with an adhesive. This adhesive bond helps to secure the stack holder to the lateral sides of the battery cell stack, maintaining the compressed state and preventing any shifting of the cells during assembly and operation.

The adhesive may be applied to the inner surface area of the stack holder.

The adhesive may alternatively be applied to the outer surface of the battery cell stack.

An adhesive is a bonding agent used to create a strong attachment between the stack holder and the battery cell stack. Common adhesives include epoxy resins or acrylic-based adhesives.

The inner surface area of the stack holder is the surface of the stack holder profiles that faces inward and makes direct contact with the lateral sides of the battery cell stack.

Another embodiment refers to the adhesive used to attach the stack holder to the battery cell stack being configured as adhesive tape. This approach replaces liquid or gel adhesives with adhesive tape applied to the inner surface of the stack holder, providing a clean, easy-to-apply bonding solution that secures the stack holder to the battery cell stack's lateral surfaces.

An adhesive tape is a pre-coated material with adhesive properties, applied to the stack holder's inner surfaces for bonding with the battery cell stack.

The adhesive tape can be double-sided and/or heat-resistant, and/or pressure-sensitive.

Yet another embodiment of the disclosure refers to a battery pack assembly that includes a pack housing with at least one accommodation chamber, a battery cell stack positioned within the accommodation chamber; and a stack holder including two profiles each extending along a lateral side of the battery cell stack, each profile including an upper portion extending beyond the lateral side of the battery cell stack and having first engagement elements.

A battery cell stack is an assembly of multiple battery cells positioned in a stacked arrangement.

A pack housing is the outer casing that contains and protects the battery cell stack, providing a secure environment and maintaining compression along the stacking direction.

The battery cells are cells with a rectangular or cuboidal shape, designed for efficient space utilization in stacked arrangements.

Terminals are the positive and negative electrical contact points on each battery cell, allowing for the flow of current between cells and to external circuits.

End plates are rigid structures positioned at both ends of the battery cell stack to distribute the compressive force and maintain structural integrity.

Yet another embodiment of the disclosure refers to a battery pack assembly, wherein the stack holder further includes a snap fit protrusion adapted to snap into a groove of the pack housing such as to hinder the battery cell stack from lifting off vertically. This snap-fit mechanism prevents vertical displacement of the battery cell stack within the accommodation chamber, thereby securing its position and maintaining alignment.

### Specific Embodiments

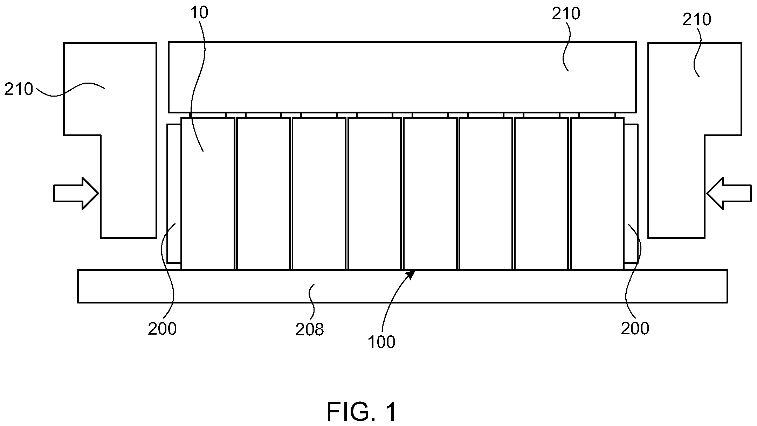

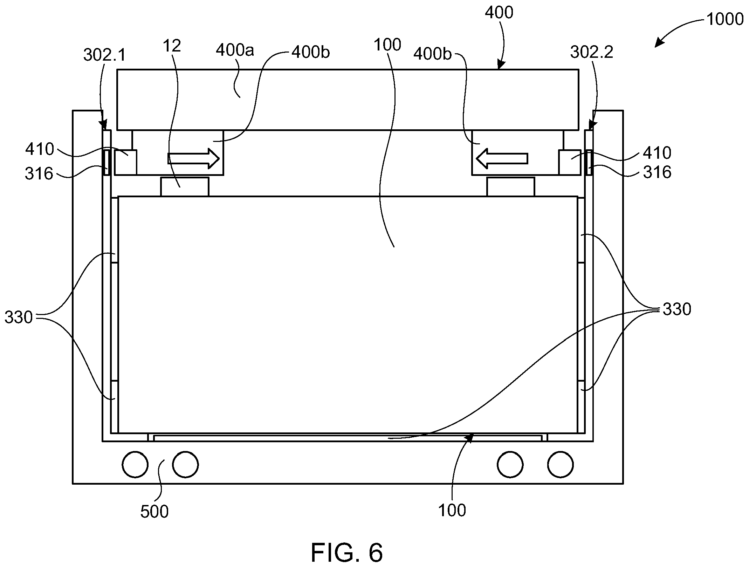

FIG. 1 illustrates a schematic view on step a) according to an embodiment of the method for assembling a battery pack 1000 (See Fig. 6). A plurality of battery cells 10 is aligned on a working piece carrier 208 of a compression tool 210 to form a battery cell stack 100. The outermost battery cells of the plurality of battery cells 10 are facing to two end plates 200. Two parts of the compression tool 210 move in from both sides laterally in the direction of the end plates 200 in order to compress the battery cells 10. A direction of the compression force is indicated by the arrows in FIG. 1. To avoid vertical movement during the compression process, a top part of the compression tool 210 is in contact with the battery cells 10. Alternatively, to avoid lateral movement, the battery cells 10 can be kept from moving vertically in a different manner according to other embodiments. The battery cells 10 may be guided in a rail according to a different embodiment. In the embodiment, the battery cells 10 have a prismatic shape.

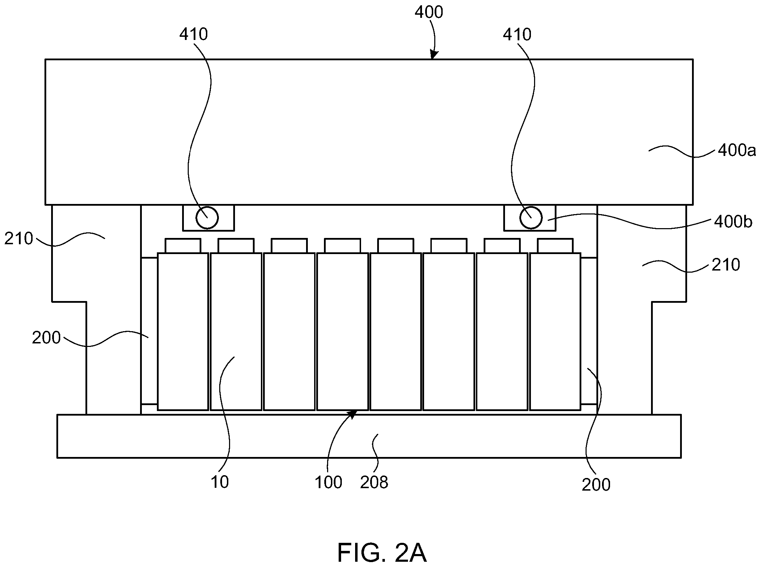

FIG. 2A illustrates a schematic view on a transitionary state between step a) and step b) according to an embodiment. A lifting tool 400 with second engagement elements 410 is now close to the battery cell stack 100, that means above the battery cell stack 100. The lifting tool 400 includes a first portion 400a capable of vertical (or up and down) movement and a second portion 400b capable of horizontal (or forward and backward) movement relative to the first portion 400a.

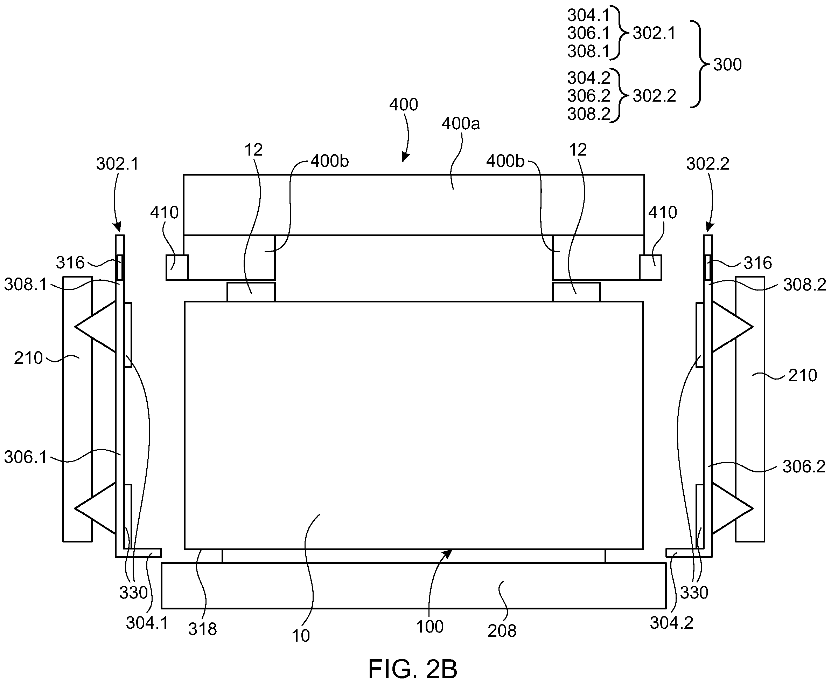

FIG. 2B illustrates a schematic view on step b) according to an embodiment. A stack holder 300 is fixed to the battery cell stack 100 in this step of the assembly process. The battery 10 cells are in a compressed state and form the battery cell stack 100. The battery cell stack 100 is oriented in such a way, that terminals 12 of the battery cells 10 face upward. Alternatively, the battery cell stack 100 may be oriented in a different way, such that the terminals 12 of the battery cells 10 face in a different direction. The stack holder 300 includes two profiles 302.1, 302.2 which extend along both lateral sides of the battery cell stack 100. A lower portion 304.1, 304.2 of each profile 302.1, 302.2 extends below and supports a bottom side 318 of the battery cell stack 100, a middle portion 306.1, 306.2 of each profile 302.1, 302.2 extends along one of the lateral sides of the battery cell stack 100 and an upper portion 308.1, 308.2 of each profile 302.1, 302.2 includes first engagement elements 316. In the embodiment shown in FIG. 2B, adhesive tape 330 is attached to the two profiles 302.1, 302.2 of the stack holders 300. Alternative adhesives like glue, spray adhesives or epoxy adhesives may be used to attach the surfaces of the profiles 302.1, 302.2 facing the battery cell stack 100 or to the battery cell stack 100.

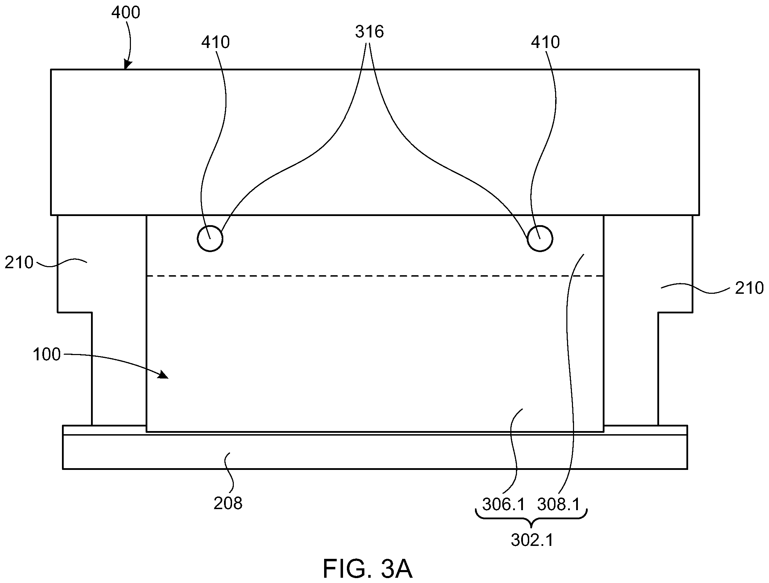

FIG. 3A illustrates a schematic view on a transitionary state between step b) and step c) according to an embodiment. The second engagement elements 410 of the lifting tool 400 are inserted into the first engagement elements 316 of the stack holder 300. In the shown embodiment, the first engagement elements 316 are configured as openings and the second engagement elements 410 are configured as corresponding pins, whose diameter corresponds approximately to the diameter of the openings. Alternative configurations of the first engagement elements and the second engagement elements may be snap fits, hooks and loops, tabs and slots, clips and clams, adhesives, press-fit joints or latches and catches. In the shown embodiment, the second engagement elements 410 interact with the first engagement elements 316 from an inner side, that means that the pins are inserted to the side of the profiles 302.1, 302.2 facing the battery cell stack 100. Alternatively, the second engagement elements 410 may interact with the first engagement elements 316 from an outer side.

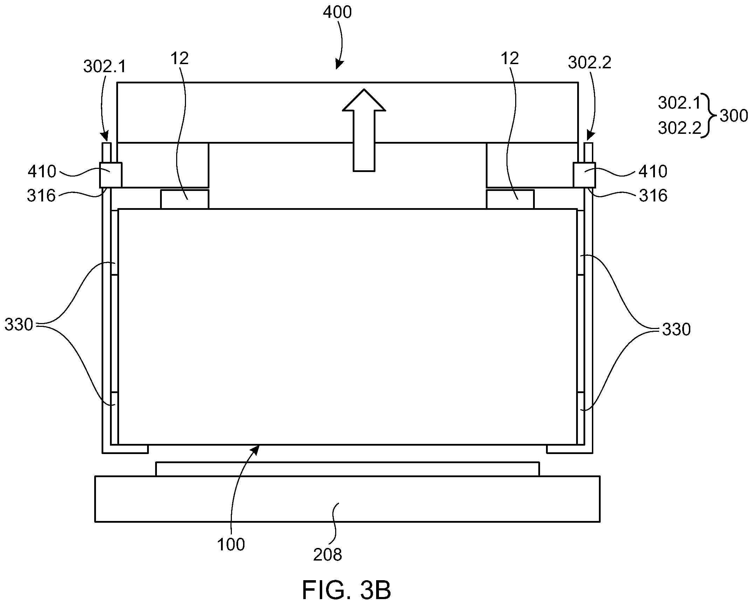

FIG. 3B illustrates a schematic view on step c) according to an embodiment. The lifting tool 400 lifts the stack holder 300 from the work piece carrier 208. Since the stack holder 300 is attached to the battery cell stack 100 with adhesive tape 330, the battery cell stack 100 is lifted as well. The compression tool 210 is not shown due to clarity reasons but the battery cell stack 100 is compressed by the compression tool 210 during steps a) - d).

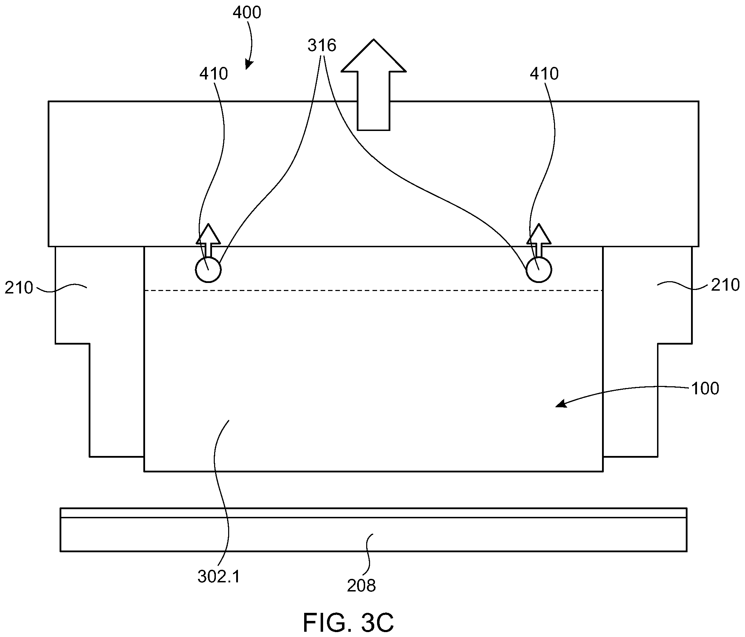

FIG. 3C illustrates a schematic view on step c) from a side view according to an embodiment. It shows that due to the interaction between the second engagement elements 410 of the lifting tool 400, and the first engagement elements 316 of the stack holder 300, the battery cell stack 100 is lifted from the working piece carrier 208. The battery cell stack 100 is still compressed by the compression tool 210.

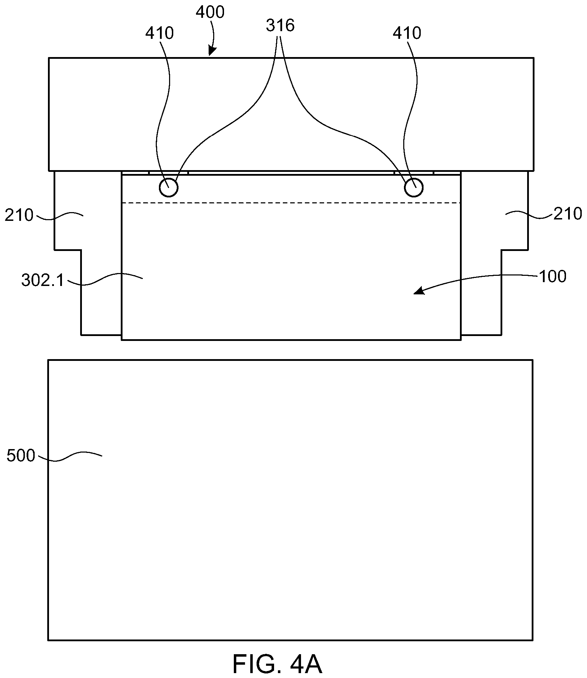

FIG. 4A illustrates a schematic side view on a transitionary state between step c) and step d) according to an embodiment. The figure shows that the stack holder 300 with the battery cell stack 100 is still compressed by the compression tool 210. The figure further shows that the battery cell stack 100 is positioned above a pack housing 500 of the battery pack 1000.

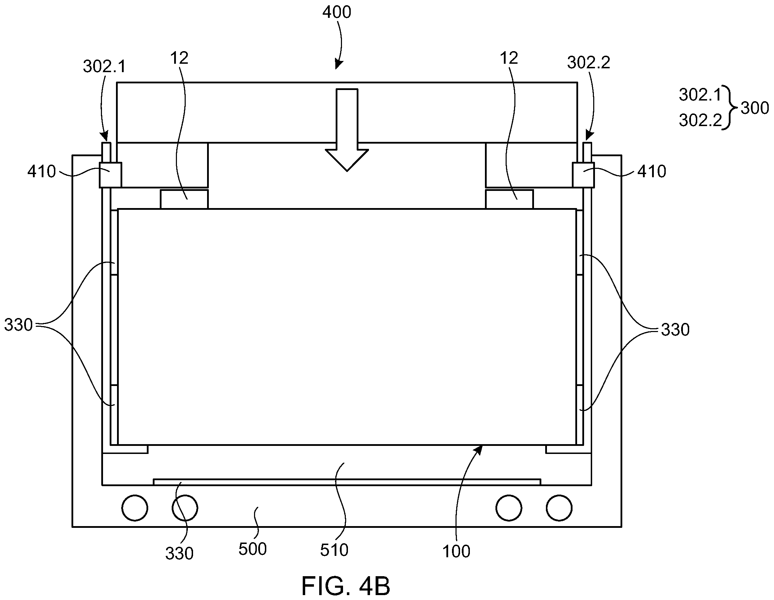

FIG. 4B illustrates a schematic view on step d) according to an embodiment. The battery cell stack 100, the stack holder 300 and the adhesive 330 are pushed out of the compression tool 210 by the lifting tool 400 into an accommodation chamber 510 of the pack housing 500. On the bottom side of the accommodation chamber 510 is another adhesive 330 which shall in another step adhere to the bottom side of the battery cell stack 100. The compression tool 210 is not shown due to better clarity.

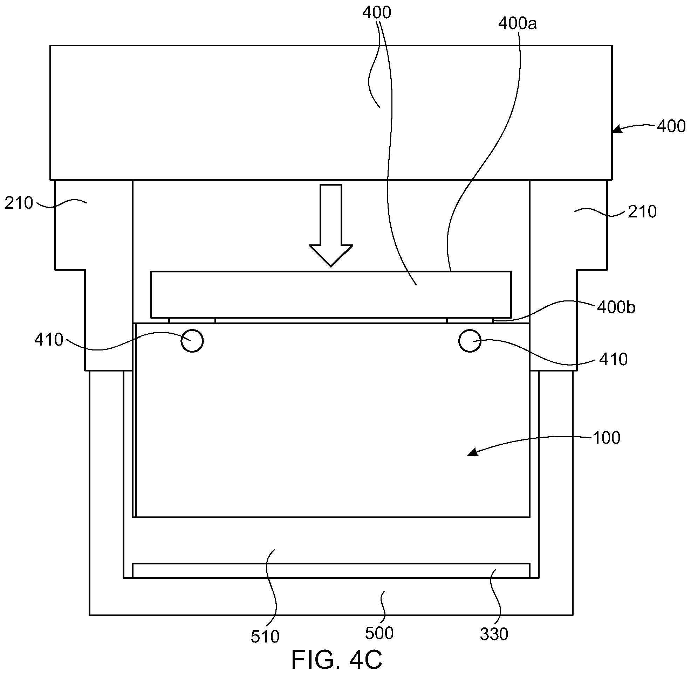

FIG. 4C illustrates a schematic view on step d) from a side view according to an embodiment. The figure shows that the battery cell stack 100 is pushed out of the compression tool 210 into the accommodation chamber 510 of the pack housing 500 by the lifting tool 400.

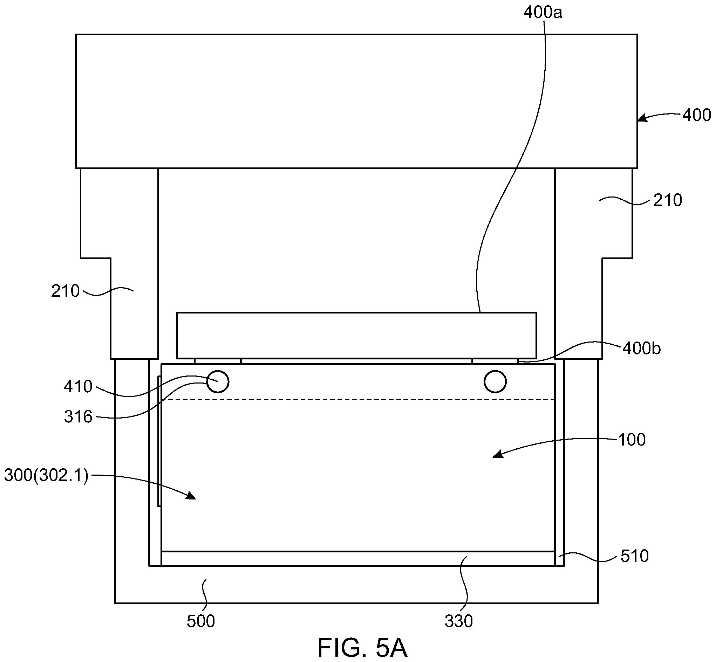

FIG. 5A illustrates a schematic view on a transitionary state between step d) and step e) according to an embodiment. The battery cell stack 100 with the stack holder 300 is fully pushed out of the compression tool 210 into the accommodation chamber 510 of the pack housing 500. The battery cell stack 100 adheres to the pack housing 500 via the adhesive 330. The second engagement elements 410 and the first engagement elements 316 still interact and thus, the lifting tool 400 is still connected to the stack holder 300.

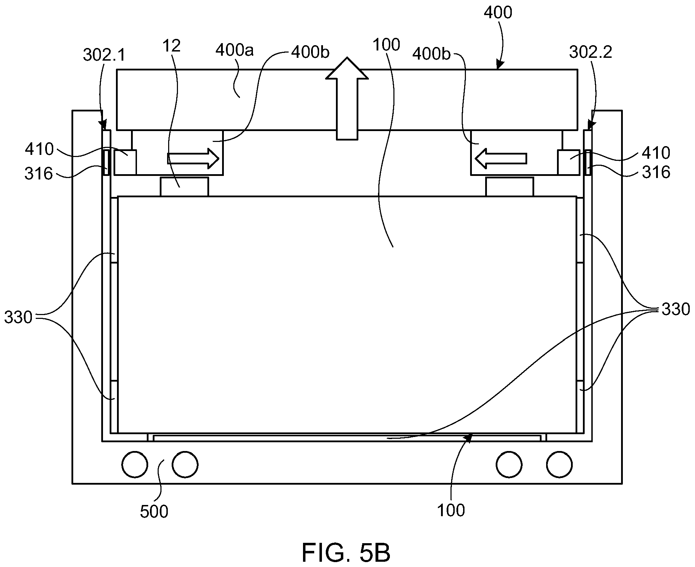

FIG. 5B illustrates a schematic view on step e) from a side view according to an embodiment. The second engagement elements 410 of the lifting tool 400, for example pins, are retracted from the first engagement elements 316, for example openings, of the stack holder 300. Thus, the lifting tool 400 and the stack holder 300 are no longer connected. In this embodiment, the second engagement elements 410 are moved into an inner direction to disengage from the first engagement elements 316. Alternatively, the second engagement elements 410 could be moved into another direction to disengage from the first engagement elements 316.

Further, as the first portion 400a of the lifting tool 400 is returned to its original position (e.g., moved upward as shown in FIG. 5B), the battery pack 1000 is assembled, as shown in FIG. 6.

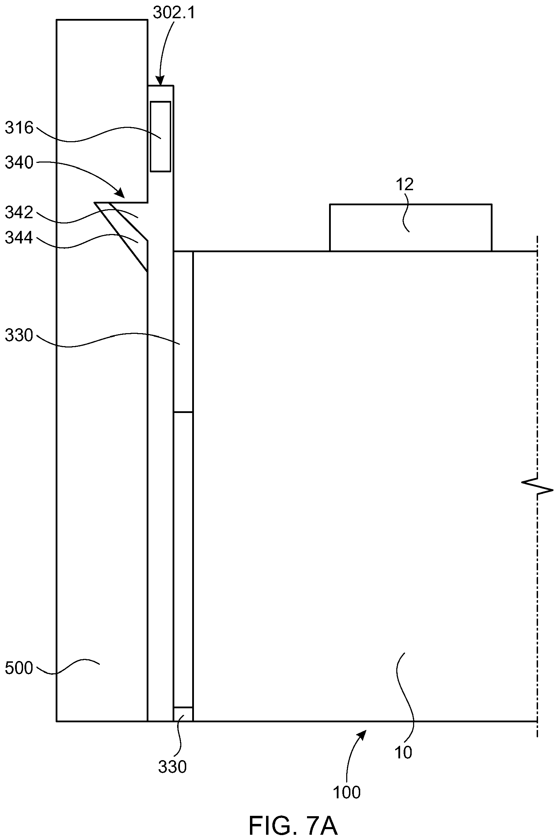

FIG. 7A illustrates schematically in a partial cut-out view an embodiment with a snap-fit 340. Most snap-fits have a common design of a protruding edge and a snap-in area. Here, the snap-fit 340 includes a protruding edge 342 assembled at the upper portions 308.1 of the profile 302.1 and a corresponding snap-in area 344 at the pack housing 500.The protruding edge 342 is adapted to snap into the snap-in area 344 such as to hinder the battery cell stack 100 from moving vertically relative to the pack housing 500. Usually, a number of similar snap-fits are provided on both of the profiles 302.1, 302.2. Other snap-fit designs may be used.

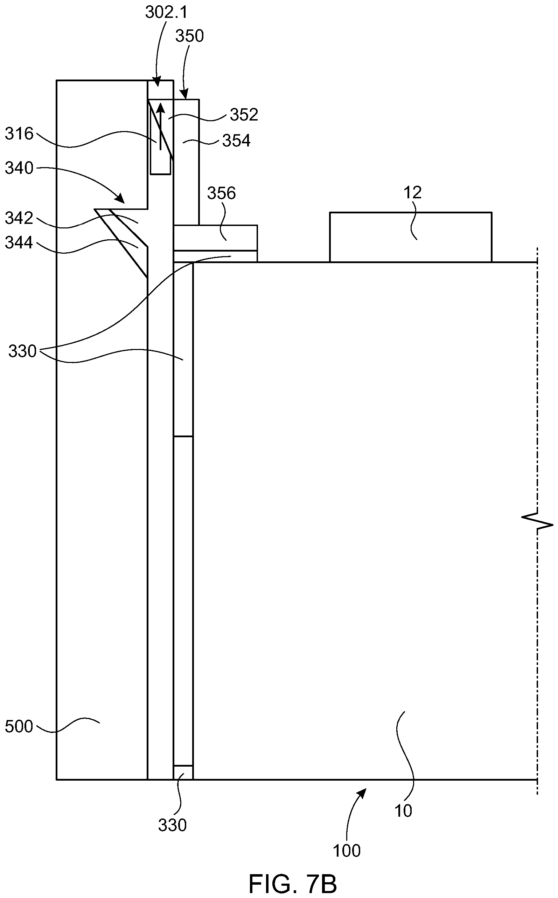

Fig. 7B illustrates schematically in a partial cut-out view an embodiment with the snap-fit 340. Additionally, another snap-fit 350 is shown. This snap fit 350 includes a protruding edge 352 assembled at a vertical part 354 of the snap fit 350. The snap-fit 350 further includes a horizontal part 356 which is assembled at the lower edge of the vertical part 354. The horizontal part 356 is further connected to the upper area of the battery stack 100 with an adhesive 330. The protruding edge 354 is adapted to snap into the first engagement elements 316 of the profiles 302.1 and 302.2 such as to hinder the battery cell stack 100 from moving vertically relative to the stack holder 300. Usually, a number of similar snap-fits are provided on both of the profiles 302.1, 302.2. Other snap-fit designs may be used.

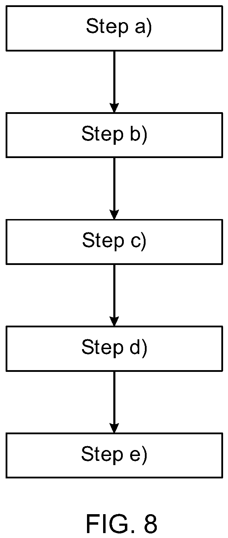

FIG. 8 illustrates in a schematic view the process of the battery pack assembly according to an embodiment. Here, step a) is to be performed before step b), which is to be performed before step c), which is to be performed before step d), which is to be performed before step e). Step a) relates to the step of compressing the battery cell stack 100 using a compression tool 210 and maintaining the applied pressure during subsequent assembly steps. Step b) relates to attaching a stack holder 300 to the battery cell stack 100 in its compressed state, wherein the stack holder 300 includes two profiles 302.1, 302.2 each extending along a lateral side of the battery cell stack 100, each profile 302.1, 302.2 including an upper portion 306.1, 306.2 extending beyond the lateral side of the battery cell stack 100 and having first engagement elements 316. Step c) relates to providing a lifting tool 400 including second engagement elements 410 designed to be engaged with the first engagement elements 316, interlocking the second engagement elements 410 with the first engagement elements 316 of the stack holder 300 by the lifting tool 400, lifting of the battery cell stack 100 and positioning the lifted battery cell stack 100 above an accommodation chamber 510 of a pack housing 500. Step d) relates to transferring the battery cell stack 100 from the compression tool 210 directly into the accommodation chamber 510 of the pack housing 500. Step e) is the final step of the assembly process and relates to detaching the second engagement elements 410 of the lifting tool 400 from the first engagement elements 316 of the stack holder 300, allowing the lifting tool 400 to separate from the stack holder 300, with the stack holder 300 remaining in the accommodation chamber 510 along with the battery cell stack 100.

In summary, the present disclosure relates to a method for assembling a battery pack including at least one battery cell stack, where the stack includes a plurality of battery cells arranged in a compressed state. The method entails applying a compressive force to the battery cell stack using a compression tool and maintaining this force throughout the assembly process. A stack holder, including two profiles positioned along lateral sides of the battery cell stack, is attached to the stack in its compressed state. Each profile features an upper portion extending beyond the lateral side of the battery cell stack, which is equipped with first engagement elements. A lifting tool, provided with corresponding second engagement elements, engages the first engagement elements, enabling the lifting tool to transfer the battery cell stack from the compression tool and position it above an accommodation chamber within a pack housing. The battery cell stack is then transferred directly into the accommodation chamber, maintaining its compressed state. The second engagement elements of the lifting tool are subsequently detached from the stack holder, leaving the stack holder and compressed battery cell stack securely within the accommodation chamber. This method facilitates precise assembly of battery packs with enhanced stability, structural integrity, and alignment. Additionally, the disclosure encompasses a battery pack constructed by this method, including a pack housing, an accommodation chamber containing a battery cell stack, and a stack holder configured to maintain the stack's compression and prevent vertical displacement.

### Reference signs

- 10: Battery cell
- 12: Terminal
- 100: Battery cell stack
- 200: End plate
- 208: Working piece carrier
- 210: Compression tool
- 300: Stack holder
- 302.1, 302.2: Profiles of the stack holder
- 304.1, 304.2: Lower portions of the profiles
- 306.1, 306.2: Middle portions of the profiles
- 308.1, 308.2: Upper portions of the profiles
- 316: First engagement elements
- 340: Snap-fit
- 342: Protruding edge
- 344: Snap-in area
- 350: Snap-fit
- 352: Protruding edge
- 354: Vertical part
- 356: Horizontal part
- 400: Lifting tool
- 410: Second engagement elements
- 500: Pack housing
- 510: Accommodation chamber
- 1000: Battery pack

## Claims

1. A method for assembling a battery pack (1000) comprising at least one battery cell stack (100) with a plurality of battery cells (10), the method comprising the steps of:
a) compressing the battery cell stack (100) using a compression tool (210) and maintaining the applied pressure during subsequent assembly steps;
b) attaching a stack holder (300) to the battery cell stack (100) in its compressed state, wherein the stack holder (300) comprises two profiles (302.1, 302.2) each extending along a lateral side of the battery cell stack (100), each profile (302.1, 302.2 ) including an upper portion (308.1, 308.2) extending beyond the lateral side of the battery cell stack (100) and having first engagement elements (316);
c) providing a lifting tool (400) comprising second engagement elements (410) designed to be engaged with the first engagement elements (316), interlocking the second engagement elements (410) with the first engagement elements (316) of the stack holder (300) by the lifting tool (400), lifting of the battery cell stack (100) and positioning the lifted battery cell stack (100) above an accommodation chamber (510) of a pack housing (500);
d) transferring the battery cell stack (100) from the compression tool (210) directly into the accommodation chamber (510) of the pack housing (500); and
e) detaching the second engagement elements (410) of the lifting tool (400) from the first engagement elements (316) of the stack holder (300), allowing the lifting tool (400) to separate from the stack holder (300), with the stack holder (300) remaining in the accommodation chamber (510) along with the battery cell stack (100).

2. The method as claimed in claim 1, wherein the stack holder (300) is made of plastic.

3. The method as claimed in claim 1 or 2, wherein each of the profiles (302.1, 302.2) of the stack holder (300) is L-shaped in such a way, that a lower portion (304.1, 304.2) of each profile (302.1, 302.2) supports a bottom side (318) of the battery cell stack (100).

4. The method as claimed in any one of the proceeding claims, wherein the first engagement elements (316) are configured as openings.

5. The method as claimed in any one of the proceeding claims, wherein in step c), the second engagement elements (410) of the lifting tool (400) are brought into engagement with the first engagement elements (316) of the stack holder (300) to an inner side of the stack holder (300).

6. The method as claimed in any one of the proceeding claims, wherein the stack holder (300) comprises a snap-fit (340) including a protruding edge (342) adapted to engage with a snap-in area (344) in the pack housing (500), preventing vertical displacement of the battery cell stack (100) in the accommodation chamber (510).

7. The method as claimed in any one of the proceeding claims, wherein in step b), the stack holder (300) is attached by providing an adhesive in the inner surface area of the stack holder.

8. The method as claimed in claim 7, wherein the adhesive is configured to be an adhesive tape.

9. A battery pack (1000) comprising:
- a pack housing (500) with at least one accommodation chamber (510);
- a battery cell stack (100) positioned within the accommodation chamber (510); and
- a stack holder (300) comprising two profiles (302.1, 302.2) each extending along a lateral side of the battery cell stack (100), each profile (302.1, 302.2) comprising an upper portion (308.1, 308.2) extending beyond the lateral side of the battery cell stack (100) and having first engagement elements (316).

10. The battery pack (1000) as claimed in claim 9, wherein the stack holder (300) further comprises a protrusion edge (342) adapted to snap into a snap-in area (344) of the pack housing (500) such as to hinder the battery cell stack (100) from lifting off vertically.
